# EUROPÄISCHE PATENTSCHRIFT

(11) **EP 0 703 413 B1**
(45) Veröffentlichungstag und Bekanntmachung des Hinweises auf die Patenterteilung: **29.03.2000**
(21) Anmeldenummer: 94114893.4
(22) Anmeldetag: 21.09.1994
(51) Int. Cl.: F23R 3/28, F23R 3/20

(54) **Brennkammer einer Gasturbogruppe**
Gas turbine combustion chamber
Chambre de combustion d'une turbine à gaz

(43) Veröffentlichungstag der Anmeldung: 27.03.1996
(73) Patentinhaber: ABB Alstom Power (Schweiz) AG, 5401 Baden (CH)
(72) Erfinder: Schulte-Werning Burkhard Dr., CH-4054 Basel (CH)
(74) Vertreter: Pöpper, Evamaria

(56) Entgegenhaltungen:
- EP-A- 0 595 026
- EP-A- 0 626 542
- CH-A- 666 340
- FR-A- 2 172 339
- FR-A- 2 588 920
- US-A- 2 537 054

## Beschreibung

### Technisches Gebiet

Die Erfindung betrifft eine mit schadstoffarmer Vormischverbrennung arbeitende Brennkammer einer Gasturbogruppe gemäss Oberbegriff des Patentanspruches 1 und ein verfahren zum Betrieb dieser Nachbrennkammer.

### Stand der Technik

Aus EP-A-595 026 ist eine Gasturbine bekannt, welche mit zweistufiger Verbrennung arbeitet und bei welcher die zweite Brennkammer der zweiten Turbine vorgeschaltet ist.

In derartigen Nachbrennkammern für stationäre Gasturbinen, deren Temperatur oberhalb der Selbstzündungstemperatur für den gasförmigen bzw. flüssigen Brennstoff liegt und in denen eine schadstoffarme vormischverbrennung stattfindet, sind oft Einbauten angeordnet, deren Nachlauf die Gefahr eines unerwünschten Flammenhalters in sich birgt.

So werden Brennstoffeindüsungen als ein Beispiel eines in eine Gasturbinenbrennkammer integrierten Bauteils konstruktiv oft über eine gekrümmte, der Brennkammerströmung ausgesetzte Zuführung verwirklicht. Die geometrisch quer zur Hauptströmung stehende Halterung der Brennstoffdüse bildet ebenso ein Totwassergebiet mit rezirkulierender Strömung aus wie das stumpfe Ende der Düse selbst. Dort, also im Nachlaufgebiet hinter dem quer stehenden Teil der lanzenartigen Brennstoffeindüsung, kann durch das lokal rezirkulierende Strömungsverhalten ein ungenügend gemischtes Brennstoff/Luft-Gemisch wieder stromauf transportiert werden. Dadurch stellt sich dann im Nachlauf statt einer Vormisch- eine Diffusionsflamme mit einer höheren Schadstoffproduktion ein. Die Flamme brennt in diesem Nachlaufgebiet stabil, weil ständig Brennstoff durch die Strömungsrezirkulation von der Eindüsungsstelle in das Totwassergebiet transportiert wird.

Der Nachteil dieses Standes der Technik besteht darin, dass in einer solchen Flamme durch die relativ langen Aufenhaltszeiten in der Verbrennungszone und die hohe Flammentemperatur die Schadstoffbildung meist gegenüber der beabsichtigten Vormischverbrennung stromab der Brennstoffeindüsung deutlich erhöht wird. Dieser Effekt ist im Hinblick auf die immer strenger werdenden Anforderungen an die Schadstoffemissionswerte unerwünscht.

Ebenso kann die thermische Belastung des Bauteiles steigen und damit eine aufwendigere Kühlung der Bauteilwand notwendig machen.

Aus dem Dokument FR-A 2 172 339 ist eine Zündeinrichtung mit Luftkühlung für einen Nachbrenner zur Schubsteigerung eines Triebwerkes bekannt, welche ein hohes Gehäuse und einen im Inneren des Gehäuses angeordneten elektrischen Zünder aufweist. Der Zünder ist mit Einrichtungen zur Zuführung von Kühlluft zum Inneren des Gehäuses und durch Einrichtungen zum Ausstoss mindestens eines Teils der Luft für die Beseitigung eines Zurückhaltens der Flamme gekennzeichnet. Die Ausblasung der Luft erfolgt dabei weit stromab der Brennstoffeindüsung. Die in dieser Druckschrift beschriebene Nachbrennkammer sorgt zwar für den gewünschten Schub, ist aber nachteilig durch eine schlechte Verbrennung (viele Kohlenwasserstoffe, hohe NOx-Werte) charakterisiert.

### Darstellung der Erfindung

Die Erfindung versucht, all diese Nachteile zu vermeiden. Ihr liegt die Aufgabe zugrunde, eine mit schadstoffarmer Vormischverbrennung arbeitende Brennkammer, im wesentlichen bestehend aus einem brennerlosen Brennraum und einer quer zur Hauptströmung angeordneten lanzenförmigen Brennstoffeindüsung, und ein Verfahren zum Betrieb dieser Brennkammer zu schaffen, wobei die Ausbildung einer Flamme im Nachlauf der Brennstoffeindüsung, also weit vor der eigentlichen Verbrennungszone, unterdrückt wird.

Erfindungsgemäss wird dies bei einer Brennkammer einer Gasturbogruppe gemäss Oberbegriff des Patentanspruches 1 dadurch erreicht, dass die Brennstoffeindüsung Mittel zur gleichzeitigen Vergleichmässigung des Geschwindigkeitsprofiles und zur Senkung der Temperatur der Strömung im Nachlaufgebiet der Brennstoffeindüsung aufweist. Diese Mittel sind vorteilhafterweise innerhalb der Brennstoffeindüsung angeordnete Zuführkanäle zur Führung eines zusätzlichen Luftmassenstromes sind, welche mit Ausblaseöffnungen verbunden sind, die sich im stromabwärts befindenden Teil der Brennstoffdüse befinden, wobei die Öffnungen in Richtung der Hauptströmung gerichtet sind und ihre Grösse ca. 1 mm beträgt.

Die Vorteile der Erfindung sind unter anderem darin zu sehen, dass der unerwünschte Flammenhaltereffekt vermindert wird und trotzdem eine gute Vermischung von Zusatzluft und Hauptmassenstrom vor der Brennstoffzufuhr bzw. Verbrennung erreicht wird, so dass die Schadstoffemissionen verringert werden. Ausserdem wird eine zusätzlich thermische Belastung des Bauteiles verhindert.

Ferner ist es vorteilhaft, wenn bei einer Brennkammer mit einer lanzenförmigen Brennstoffeindüsung, bei der zwischen der Düsenhalterung und der eigentlichen Brennstoffdüse in Stömungsrichtung der Hauptströmung nur ein geringer Abstand (kleiner fünf Halterungsdurchmesser) vorhanden ist, so dass auch im Nachlauf der Brennstoffdüsenhalterung mit einem unerwünschten Flammenhaltereffekt zu rechnen ist, noch weitere, mit den Zuführkanälen in Verbindung stehende Ausblaseöffnungen im sich stromabwärts befindenden Teil der Brennstoffdüsenhalterung in mindestens einer Reihe angeordnet sind

Bei dem Verfahren zum Betrieb der erfindungsgemässen Brennkammer wird im Nachlauf des quer zur Hauptströmung stehenden Teils der Brennstoffeindüsung durch die Ausblaseöffnungen in die Brennkammer ein zusätzlicher Luftmassenstrom vor der eigentlichen Verbrennungszone ausgeblasen, wobei die Grösse des Luftmassenstromes < 0,5 des Massenstromes des Heissgases.

Es ist besonders zweckmässig, wenn der zusätzliche Luftmassenstrom der aufgeheizten Brennkammerkühlluft entnommen wird.

### Kurze Beschreibung der Zeichnung

In der Zeichnung sind Ausführungsbeispiele der Erfindung anhand einer lanzenförmigen Brennstoffeindüsung für eine Gasturbinennachbrennkammer dargestellt. Es zeigen:
- Fig. 1: einen Längsschnitt der schematisch dargestellten Gasturbinennachbrennkammer;
- Fig. 2: einen Teillängsschnitt der Brennkammer im Bereich der lanzenförmigen Brennstoffeindüsung, wobei zwischen der Brennstoffdüsenhalterung und der eigentlichen Brennstoffdüse in Strömungsrichtung ein verhältnismässig grosser Abstand vorhanden ist;
- Fig. 3: einen Teillängsschnitt der Brennkammer im Bereich der lanzenförmigen Brennstoffeindüsung, wobei zwischen der Brennstoffdüsenhalterung und der eigentlichen Brennstoffdüse in Strömungsrichtung ein verhältnismässig geringer Abstand vorhanden ist;
- Fig. 4a: einen Querschnitt gemäss Fig. 2 mit zusätzlicher schematischer Darstellung des Temperatur- und des Geschwindigkeitsprofils stromauf der Brennstoffeindüsung und stromab der Brennstoffeindüsung, d.h. im Nachlauf;
- Fig. 4b: eine Darstellung analog zu Fig. 4a, aber ohne Nachlaufbeeinflussung, d.h. gemäss dem Stand der Technik.

Es sind nur die für das Verständnis der Erfindung wesentlichen Elemente gezeigt. Die Richtung der Medien ist mit Pfeilen bezeichnet.

### Weg zur Ausführung der Erfindung

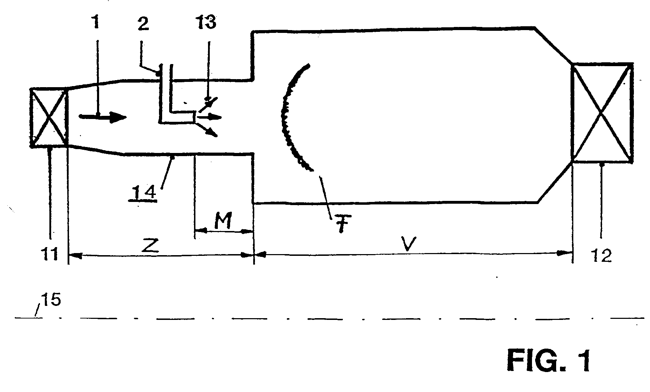

Nachfolgend wird die Erfindung anhand von Ausführungsbeispielen und der Figuren 1 bis 4 näher erläutert.

Fig. 1 zeigt schematisch im Überblick eine in einen Gasturbinenprozess integrierte Nachbrennkammer 14. Diese ist stromab einer hier nicht dargestellten Verdichtereinheit mit einer sich daran anschliessenden ebenfalls nicht dargestellten ersten Brennkammer und einer stromab der ersten Brennkammer wirkenden ersten Turbine 11 angeordnet. Stromab der Nachbrennkammer 14 wirkt dann eine zweiten Turbine 12.

Die Nachbrennkammer 14 wird mit dem heissen Abgas 1 der ersten Turbine 11 beaufschlagt. Die Nachbrennkammer 14 besteht aus einem brennerlosen Brennraum, welcher sich zwischen der Abströmungsebene der ersten Turbine 11 und der Anströmungsebene der zweiten Turbine 12 erstreckt. Die Brennkammer hat vorzugsweise im wesentlichen die Form eines zusammenhängenden ringförmigen axialen oder quasi-axialen Zylinders, was aus der Mittelachse 15 hervorgeht und ist aus einer Zuströmzone Z mit Mischzone M und einer Verbrennungszone V zusammengesetzt. Die Brennkammer 14 kann auch aus einer Anzahl von axial, quasi-axial oder schraubenförmig angeordneten und in sich abgeschlossenen Brennräumen bestehen.

In Umfangsrichtung des die Brennkammer bildenden ringförmigen Zylinders sind mehrere lanzenförmige Brennstoffeindüsungen 2 angeordnet, welche beispielsweise über eine nicht dargestellte Ringleitung miteinander verbunden sind und durch die der Brennstoff 13 in den Heissgasstrom eingemischt wird.

Als Brennstoff 13 werden gasförmige Brennstoffe, beispielsweise Erdgas oder Öl/Wasser-Emulsionen verwendet, wobei auf Grund der ständig steigenden Forderungen nach geringen NOx-Emissionen dem Erdgasbetrieb der Vorzug gegeben werden sollte, da hier sehr niedrige NOx-Werte erzielbar sind.

In der Nachbrennkammer 14 findet eine schadstoffarme Vormischverbrennung statt. Die Eintrittstemperatur in die Brennkammer ist sehr hoch, denn das Heissgas (Abgas der ersten Turbine) hat eine Temperatur von etwa 1000°C. Diese Temperatur ist damit höher als die Selbstzündungstemperatur des Brennstoffes.

In der Mischstrecke M kommt es zu einer intensiven Vermischung des Brennstoffes 13 mit dem Heissgas 1. Im Hinblick auf eine schadstoffarme Verbrennung muss nun dafür gesorgt werden, dass die Flamme F erst stromab der Mischstrecke M stabil brennt und nicht schon im Nachlauf der Brennstoffeindüsung 2, weil sonst die im Stand der Technik genannten Nachteile auftreten. Aus diesem Grunde wird beim Betrieb mit Flüssigbrennstoff auch anstelle von reinem Öl eine Öl/Wasser-Emulsion verwendet, da diese später zündet als das das reine Öl.

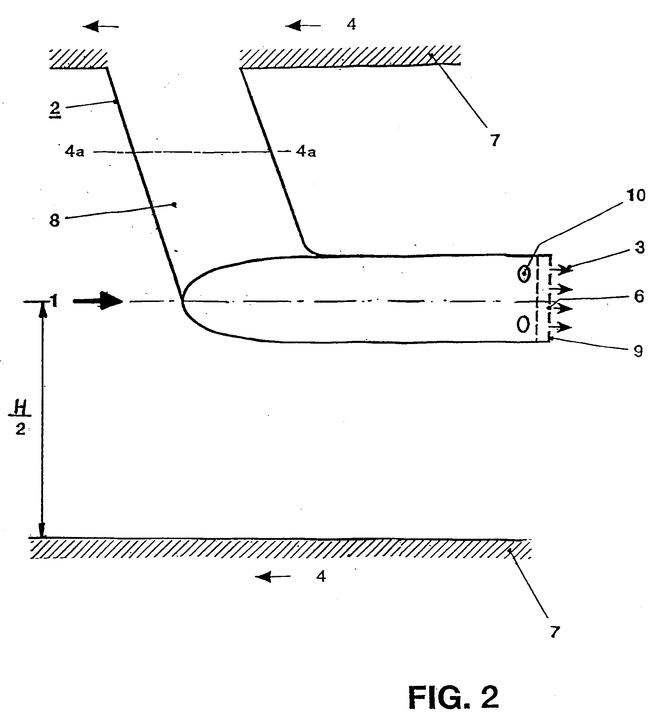

Fig. 2 zeigt einen vergrösserten Teillängsschnitt der Nachbrennkammer 14 im Bereich der Brennstoffeindüsung 2. Die lanzenförmige Brennstoffeindüsung 2 wird durch die Brennkammerwand 7, die von einem Kühlluftstrom 4 vor Überhitzung gekühlt wird, in das Innere der Nachbrennkammer 14 geführt. Sie besteht aus einer Brennstoffdüsenhalterung 8 und einer Brennstoffdüse 9. Die zylinderförmige Brennstoffdüsenhalterung 8 steht quer zur Hauptströmung 1 der Brennkammer 14 und reicht bis in die Mitte der Brennkammer, also bis zu H/2, so dass sich die daran anschliessende Brennstoffdüse 9 ebenfalls in der Mitte der Hauptströmung 1 befindet.

Bei dem in Fig. 2 dargestellten Ausführungsbeispiel ist zwischen der Brennstoffdüsenhalterung 8 und der eigentlichen Brennstoffdüse 9 ein verhältnismässig grosser Abstand in Strömungsrichtung vorhanden. Dieser Abstand sollte mehr als 5 Halterungsdurchmessser betragen, was in Fig. 2 nicht massstäblich dargestellt ist. Damit wird erreicht, dass die quer zur Hauptströmung 1 stehende Brennstoffdüsenhalterung 8 zwar ein Gebiet mit rezirkulierender Strömung bildet, aber dieses Rezirkulationsgebiet zu vernachlässigen ist, denn auf Grund der grossen Entfernung von der Eindüsungsstelle 10 des Brennstoffes 13 tritt hier kein unerwünschter Flammenhaltereffekt ein, da der Brennstoff nicht in dieses Gebiet transportiert wird.

Anders verhält es sich aber im Nachlaufgebiet der Brennstoffdüse 9. Dort stellt sich ohne die erfindungsgemässen Mittel normalerweise eine rezirkulierende Strömung mit einer gegenüber der Flammengeschwindigkeit kleineren Strömungsgeschwindigkeit, die die Ursache für die Stabilisierung einer unerwünschten Flamme in diesem Gebiet ist. Durch das lokal rezirkulierende Strömungsverhalten wird ein ungenügend gemischtes Brennstoff/Luft-Gemisch wieder stromauf transportiert, es nimmt also nicht an der stromab stattfindenden schadstoffarmen Vormischverbrennung teil. Statt dessen stellt sich im Nachlauf der Brennstoffdüse 9 nun eine Diffusionsflamme mit wesentlich höherer Schadstoffproduktion ein.

Das unerwünschte Gebiet der rezirkulierenden Strömung wird reduziert bzw. völlig beseitigt, wenn in der Brennstoffeindüsung 2 Mittel vorhanden sind, welche zu einer Vergleichmässigung des Geschwindigkeitsprofils und zu einer gleichzeitigen Senkung der Temperatur im Nachlaufgebiet der Brennstoffdüse 9 führen. Diese Mittel sind die in Fig. 2 bis Fig. 4 dargestellten innerhalb der Brennstoffeindüsungen angeordneten Luftzuführkanäle 5 und die Ausblaseöffnungen 6, durch welche ein zusätzlicher Luftmassenstrom 3 in die Brennkammer 14 eingebracht wird. Die Ausblaseöffnungen 6 sind dabei im sich stromabwärts befindenden Teil der Brennstoffdüse 9 angeordnet.

Der zusätzliche Luftmassenstrom 3 mischt sich beispielsweise mit einem speziell aufbereiteten, aus der Eindüsungsstelle 10 tretenden Erdgasstrahl. Da die Luftausblasung stromauf der Flamme, also vor der eigentlichen Verbrennungszone erfolgt, wird auch diese Luft eingemischt und stört die Vormischverbrennung nicht, sondern sie nimmt vollständig an der Verbrennung teilnimmt und führt damit nicht zu einer indirekten Erhöhung der Schadstoffwerte.

Im vorliegenden Ausführungsbeispiel wird der zusätzliche Luftmassenstrom 3 der aufgeheizten Brennkammerkühlluft 4 entnommen. Selbstverständlich kann die Zusatzluft 3 auch anderen Luftströmungen entnommen werden, beispielsweise kann sie einem ausserhalb der Brennkammer angeordnetem Plenum entnommen werden.

Je nach Ausblaserate kann damit die notwendige Verminderung des Flammenhaltereffekts bei trotzdem guter Vermischung von zusätzlichem Luftmassenstrom 3 und Hauptmassenstrom 1 vor der Eindüsungsstelle 10 für den Brennstoff bzw. vor der Verbrennung erreicht werden. Die Ausblaserate soll so bemessen sein, dass der ausgeblasene Luftmassenstrom < 0,5% des Massenstromes des Heissgases beträgt.

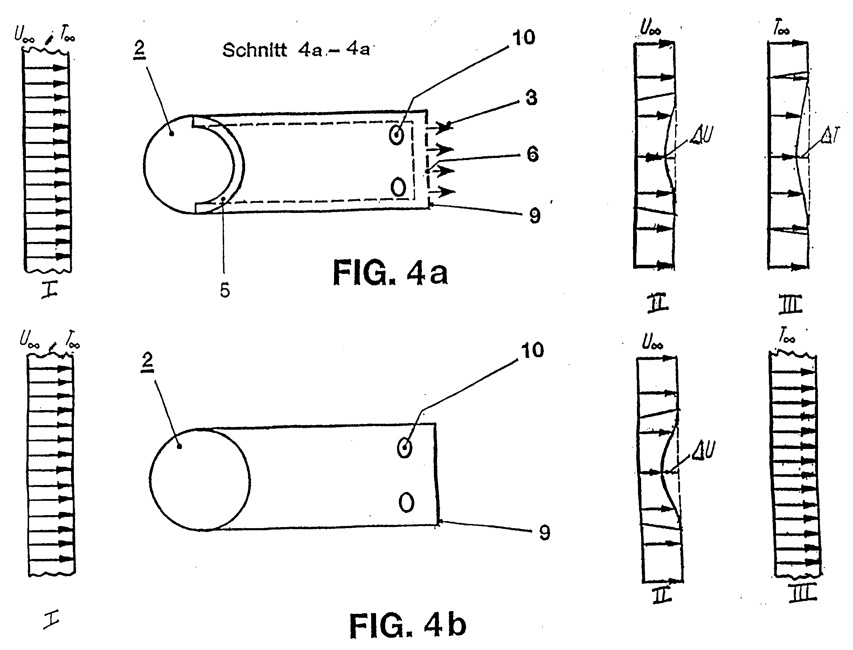

Fig. 4a zeigt einen Teilquerschnitt von Fig. 2. Mit römisch I ist das Temperatur- und Geschwindigkeitsprofil der Hauptströmung 1 vor Auftreffen der Strömung auf die lanzenförmige Brennstoffeindüsung 2 bezeichnet, mit römisch II ist das Geschwindigkeitsprofil im Nachlauf bezeichnet und mit römisch III ist das Temperaturprofil im Nachlauf bezeichnet. Einmischeffekte des Brennstoffstrahles sind nicht gezeigt.

Fig. 4b zeigt zum Vergleich die entsprechenden Verläufe nach dem bisherigen Stand der Technik. Durch die Erfindung werden zwei positive Effekte erzielt: Die Reduktion der Strömungsgeschwindigkeit infolge der Einbauten wird verringert, beispielsweise wird die Geschwindigkeitsdifferenz ΔU halbiert im Vergleich zum Stand der Technik, und die Temperatur im Nachlauf wird gesenkt, d.h. es wird eine Temperaturdifferenz ΔT eingeführt. Damit steigt die Zündverzugszeit, also die Zeit bis zur Selbstzündung an und es kann eine bessere Duchmischung von Brennstoff und Heissgas erfolgen.

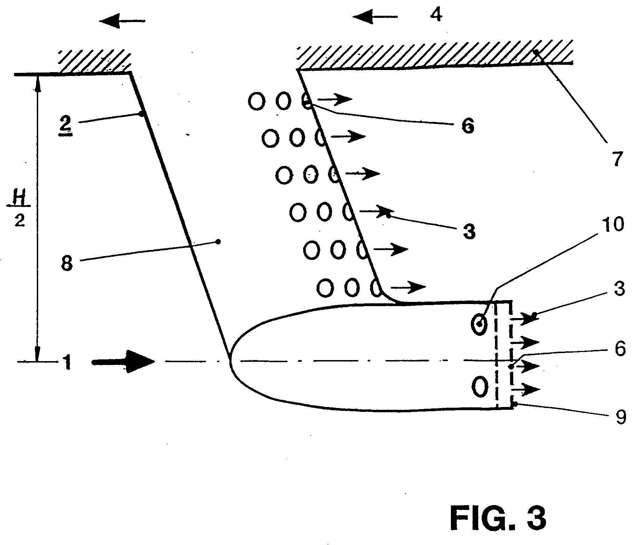

Ein weiteres Ausführungsbeispiel ist in Fig. 3 dargestellt. Bei der hier abgebildeten lanzenförmigen Brennstoffeindüsung 2 ist der Abstand zwischen der quer zur Hauptströmung 1 angeordneten Brennstoffhalterung 8 und der eigentlichen Brennstoffdüse 9 wesentlich geringer als in dem in Fig. 2 dargestellten Ausführungsbeispiel. Das bedeutet, dass die Brennstoffdüsenhalterung 8 wie das stumpfe Ende der Brennstoffdüse 9 selbst ein Gebiet mit rezirkulierender Strömung bildet. Um im Nachlauf der Brennstoffdüsenhalterung 8 einen Flammenhaltereffekt zu unterdrücken, müssen deshalb weitere, mit den Zuführkanälen 5 in Verbindung stehende Ausblaseöffnungen 6 im sich stromabwärts befindenden Teil der Brennstoffdüsenhalterung 8 angeordnet werden. Diese sind vorteilhafterweise in mehreren Reihen angebracht.

Ein weiterer Vorteil der Erfindung ergibt sich daraus, dass der zusätzliche Luftmassenstrom 3 auch gleichzeitig zu einer eventuell notwendigen Kühlung der Brennstoffdüsenhalterung 8 und der Brennstoffdüse 9 beiträgt.

### Bezugszeichenliste

- 1: Hauptströmung
- 2: Brennstoffeindüsung
- 3: zusätzlicher Luftmassenstrom
- 4: Brennkammerkühlluft
- 5: Kanal
- 6: Ausblaseöffnungen
- 7: Brennkammerwand
- 8: Brennstoffdüsenhalterung
- 9: Brennstoffdüse
- 10: Eindüsungsstelle für den Brennstoff
- 11: erste Turbine
- 12: zweite Turbine
- 13: Brennstoff
- 14: Nachbrennkammer
- 15: Mittelachse
- T: Temperatur
- ΔT: Temperaturdifferenz
- U: Geschwindigkeit
- ΔU: Geschwindigkeitsdifferenz
- H: Abstand zwischen gegenüberliegenden Brennkammerwänden im Bereich der Brennstoffdüse
- Z: Zuströmzone
- M: Mischzone
- V: Verbrennungszone

## Patentansprüche

1. Brennkammer (14) einer Gasturbogruppe, welche stromab einer ersten Turbine (11) und stromauf einer zweiten Turbine (12) angeordnet ist mit einem sich zwischen der Abströmungsebene der ersten Turbine (11) und der Anströmungsebene der zweiten Turbine (12) erstreckenden brennerlosen Brennraum und mit einer lanzenförmigen Brennstoffeindüsung (2), welche aus einer sich quer zur Hauptströmung (1) bis etwa zur Mittelachse des Brennraumes erstreckenden Brennstoffdüsenhalterung (8) und einer in Strömungsrichtung in der Mittelachse angeordneten mit der Brennstoffdüsenhalterung (8) verbundenen Brennstoffdüse (9) besteht, wobei die Brennkammer (14) mit Vormischverbrennung und ohne Filmkühlluft arbeitet und die Eintrittstemperatur des Abgases der ersten Turbine (11) in die Brennkammer (14) oberhalb der Selbstzündungstemperatur des Brennstoffes (13) liegt, dadurch gekennzeichnet, dass zur Vergleichmässigung des Geschwindigkeitsprofils und zur Senkung der Temperatur der Strömung im Nachlaufgebiet innerhalb der Brennstoffeindüsung (2) Zuführkanäle (5) zur Führung eines zusätzlichen Luftmassenstromes (3) angeordnet sind, welche mit Ausblaseöffnungen (6) verbunden sind, die sich im stromabwärts befindenden Teil der Brennstoffdüse (9) befinden, wobei die Öffnungen (6) in Richtung der Hauptströmung gerichtet sind und ihr Durchmesser ca. 1 mm beträgt.

2. Brennkammer nach Anspruch 1, dadurch gekennzeichnet, dass bei Verwendung einer Brennstoffeindüsung (2), deren axialer Abstand zwischen Brennstoffdüsenhalterung (8) und Brennstoffdüse (9) geringer als 5 Halterungsdurchmesser ist, weitere, mit den Zuführkanälen (5) in Verbindung stehende Ausblaseöffnungen (6) im sich stromabwärts befindenden Teil der Brennstoffdüsenhalterung (8) in mindestens einer Reihe angeordnet sind.

3. Verfahren zum Betrieb einer Brennkammer nach Anspruch 1, dadurch gekennzeichnet, dass im Nachlauf des quer zur Hauptströmung (1) stehenden Teils der Brennstoffeindüsung (2) durch die Ausblaseöffnungen (6) in die Brennkammer (14) ein zusätzlicher Luftmassenstrom (3) vor der eigentlichen Verbrennungszone ausgeblasen wird, wobei die Grösse des Luftmassenstromes (3) < 0,5 % des Massenstromes des Heissgases (1) beträgt.

4. Verfahren nach Anspruch 3, dadurch gekennzeichnet, dass der zusätzliche Luftmassenstrom (3) der aufgeheizten Brennkammerkühlluft (4) entnommen wird.

## Claims

1. Combustion chamber (14) of a gas-turbine group which is arranged downstream of a first turbine (11) and upstream of a second turbine (12) and has a burnerless combustion space, extending between the outflow plane of the first turbine (11) and the oncoming-flow plane of the second turbine (12), and has a lance-shaped fuel injector (2) which comprises a fuel-nozzle holder (8), extending transversely to the main flow (1) approximately up to the centre axis of the combustion space, and a fuel nozzle (9) arranged in the direction of flow in the centre axis and connected to the fuel-nozzle holder (8), the combustion chamber (14) working with premixing combustion and without film cooling air, and the inlet temperature of the exhaust gas of the first turbine (11) into the combustion chamber (14) being above the self-ignition temperature of the fuel (13), characterized in that for evening out the velocity profile and for lowering the temperature of the flow in the wake region there are arranged within the fuel injector (2) feed passages (5) for guiding an additional mass air flow (3), which feed passages (5) are connected to discharge openings (6) which are located in the part of the fuel nozzle (9) located downstream, the openings (6) being directed in the direction of the main flow and their diameter being about 1 mm.

2. Combustion chamber according to Claim 1, characterized in that, if a fuel injector (2) is used whose axial distance between fuel-nozzle holder (8) and fuel nozzle (9) is less than 5 times the holder diameter, further discharge openings (6) connected to the feed passages (5) are arranged in at least one row in the part of the fuel-nozzle holder (8) located downstream.

3. Method of operating a combustion chamber according to Claim 1, characterized in that an additional mass air flow (3) is discharged through the discharge openings (6) into the combustion chamber (14) before the actual combustion zone in the wake of the part of the fuel injector (2) disposed transversely to the main flow (1), the size of the mass air flow (3) being < 0.5 % of the mass flow of the hot gas (1).

4. Method according to Claim 3, characterized in that the additional mass air flow (3) is extracted from the heated combustion-chamber cooling air (4).

## Revendications

1. Chambre de combustion (14) d'un turbogroupe à gaz, qui est disposée en aval d'une première turbine (11) et en amont d'une seconde turbine (12) avec un espace de combustion sans brûleur s'étendant entre le plan de sortie de la première turbine (11) et le plan d'entrée de la seconde turbine (12) et avec une injection de combustible en forme de lance (2), qui se compose d'un support d'injecteur de combustible (8) s'étendant transversalement par rapport à l'écoulement principal (1) environ jusqu'à l'axe central de l'espace de combustion et d'un injecteur de combustible (9) disposé sur l'axe central dans le sens de l'écoulement et relié au support d'injecteur de combustible (8), dans laquelle la chambre de combustion (14) travaille avec une combustion à prémélange et sans air de refroidissement pelliculaire et la température d'entrée des gaz d'échappement de la première turbine (11) dans la chambre de combustion (14) se situe au-dessus de la température d'auto-inflammation du combustible (13), caractérisée en ce que, pour l'égalisation du profil de vitesse et l'abaissement de la temperature de l'écoulement, on a disposé dans la zone du sillage à l'intérieur de l'injection de combustible (2) des canaux d'arrivée (5) pour le guidage d'un courant massique d'air supplémentaire (3), qui sont raccordés à des orifices de soufflage (6), qui se trouvent dans la partie de l'injecteur de combustible (9) se trouvant vers l'aval, les orifices (6) étant orientés dans le sens de l'écoulement principal et leur diamètre valant environ 1 mm.

2. Chambre de combustion suivant la revendication 1, caractérisée en ce que, en cas d'utilisation d'une injection de combustible (2) dont la distance axiale entre le support d'injecteur de combustible (8) et l'injecteur de combustible (9) est inférieure à 5 fois le diamètre du support, on a disposé d'autres orifices de soufflage (6) communiquant avec les canaux d'arrivée (5), en au moins une rangée dans la partie du support d'injecteur de combustible (8) se trouvant vers l'aval.

3. Procédé pour la conduite d'une chambre de combustion suivant la revendication 1, caractérisé en ce qu'un courant massique d'air supplémentaire (3) est insufflé dans la chambre de combustion (14) à travers les orifices de soufflage (6) avant la zone de combustion proprement dite, dans le sillage de la partie de l'injection de combustible (2) dressée transversalement par rapport à l'écoulement principal (1), la grandeur du courant massique d'air (3) étant < 0,5 % du courant massique des gaz chauds (1).

4. Procédé suivant la revendication 3, caractérisé en ce que le courant massique d'air supplémentaire (3) est prélevé dans l'air de refroidissement échauffé (4) de la chambre de combustion.
